Europäisches Patentamt

European Patent Office

Office européen des brevets

(11) Publication number : **0 471 496 A1**

# EUROPEAN PATENT APPLICATION

(21) Application number : **91307212.0**

(22) Date of filing : **06.08.91**

(51) Int. Cl.⁵ : **F16D 65/56**

(30) Priority : **14.08.90 GB 9017763**

(43) Date of publication of application :
**19.02.92 Bulletin 92/08**

(84) Designated Contracting States :
**DE FR GB IT SE**

(71) Applicant : **LUCAS INDUSTRIES PUBLIC LIMITED COMPANY**
**Brueton House, New Road**
**Solihull, West Midlands B91 3TX (GB)**

(72) Inventor : **Margetts, Hugh Grenville**
**26 Redwood Close**
**Ross on Wye HR9 5UD (GB)**
Inventor : **England, Michael John**
**20 Wintour Close**
**Chepstow NP6 5LE (GB)**
Inventor : **Wilkinson, Timothy Andrew**
**Blk 12 Kensington Park Drive**
**15-03 Singapore (SG)**

(74) Representative : **Waite, Anthony William et al**
**MARKS & CLERK Alpha Tower Suffolk Street**
**Queensway**
**Birmingham B1 1TT (GB)**

(54) Automatic brake adjuster.

(57) An automatic brake adjuster includes a brake-applying strut (6) having two parts (6A, 6C) threaded together so that the length of the strut can be varied by relative rotation of the parts. An adjuster member (13) has a rotary drive connection with one (6A) of the parts. Clutch means (19, 20) acts to hold the adjuster member (13) against rotation during brake-applying movement of the strut enabling the rotary drive connection to cause relative rotation between the parts for brake adjustment. The adjuster member (13) and clutch means (19, 20) are interconnected by a further clutch (21) which slips to prevent further adjustment upon the attainment of a predetermined braking load through the strut, thereby rendering the adjuster load insensitive.

EP 0 471 496 A1

$\underline{F\ I\ G\ \ 2}$

This invention relates to an automatic adjuster for a brake of the general kind in which at least one friction element is urged into braking engagement with a braking surface by a brake applying strut moved by an actuator device, the strut being of variable length and the adjuster being such as to vary the length of the strut during its brake applying movement, in response to excessive movement of the friction element towards the braking surface, in order to set a new retracted position for the friction element.

In one known form of adjuster suitable for use in an internal shoe drum brake of this general kind, the strut forms part of the adjuster and includes a pair of threadedly interengaged strut parts, and an adjuster member forms a geared connection with one of the strut parts and is controlled by a clutch in such a manner that, with the adjuster member held against rotation during brake-applying movement of the strut, the geared connection causes the length of the strut to increase and subsequent disengagement of the clutch, upon brake release, enables the adjuster member to rotate and permit return movement of the strut.

Although it is advantageous to adjust the length of the strut during brake application, because the return force on the friction element is then relieved by the actuator device, there is the drawback that, with this type of operation, the adjuster operates in a load-sensitive manner, i.e. it will continue to adjust during movement of the friction element in the brake-applying direction due to deflection of the brake components under load.

An object of the present invention is to provide an automatic adjuster for a brake of the aforesaid general kind which adjusts during brake application, but which operates in a load-insensitive manner.

According to the present invention, an automatic adjuster includes a two part brake-applying strut of which the parts are interconnected by a threaded connection enabling the length of the strut to be varied by relative rotation of the parts, an adjuster member having a drive connection with one of the strut parts, first clutch means acting to hold the adjuster member against rotation during brake-applying movement of the strut enabling the drive connection to cause relative rotation between the strut parts, in response to excessive brake-applying movement of the strut, such as to cause a compensatory increase in the length of the strut, the adjuster member and clutch means being interconnected by second clutch means which normally acts to prevent rotation of the adjuster member, but permits rotation of the adjuster member and thus prevents further relative rotation of the strut parts, when the braking load through the strut reaches a predetermined value.

The first clutch means conveniently includes a clutch member normally held in clutching engagement with fixed structure, the clutch member being connected to the adjuster member by way of the second clutch means.

Preferably, the second clutch means is of the multi-plate type.

In one convenient arrangement, the adjuster member is connected by a uni-directional mechanism to a fixed structure in such a manner as to permit movement of the adjuster member in an adjusting direction, but to prevent movement thereof in the reverse direction.

The invention will now be described, by way of example, with reference to the accompanying drawings in which:-

Figure 1 is a front view of one form of an internal shoe drum brake embodying the adjuster of the invention;

Figure 2 is a cross-section of part of an actuator of the drum brake of Figure 1;

Figure 3 is a longitudinal cross-section along the line B-B of Figure 2 showing part of an automatic adjuster incorporated in the brake of Figure 1, and

Figure 4 is a cross-section along the line A-A of Figure 3.

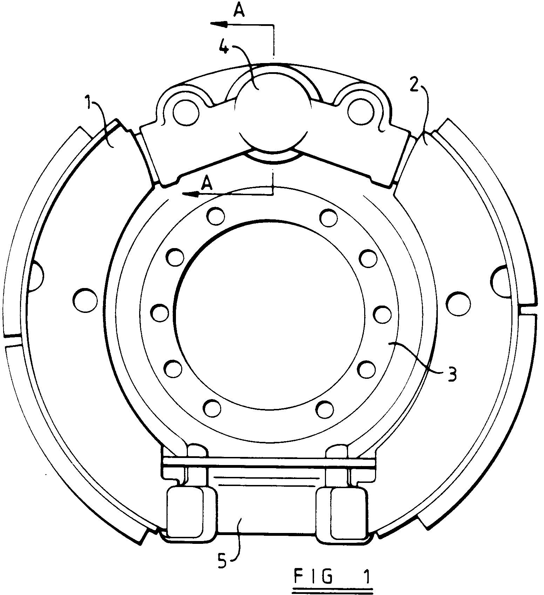

Referring to Figure 1 of the drawings, the internal shoe drum brake illustrated therein has a pair of brake shoes 1, 2 mounted on a backplate 3 and having an actuator 4 disposed between one pair of adjacent shoe ends for separating the shoes into braking engagement with a brake drum (not shown). The other ends of the shoes are supported on an abutment 5 secured to or forming part of the backplate 3.

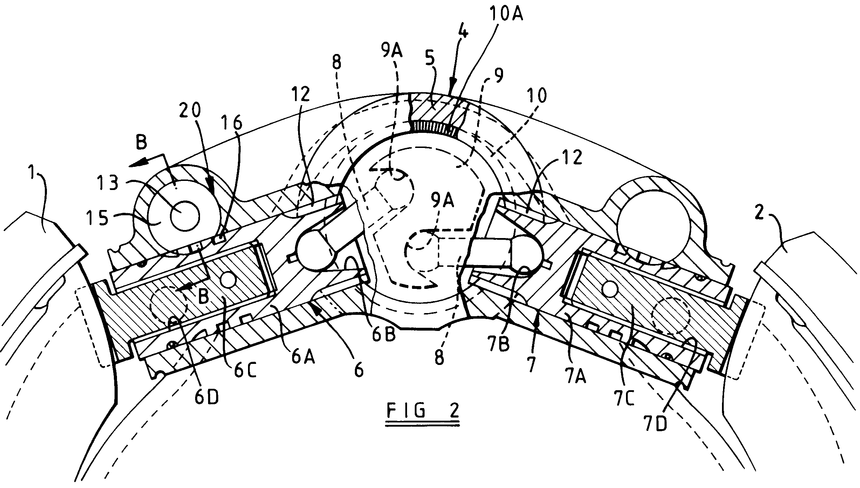

The actuator 4 is illustrated in greater detail in Figure 2, from which it will be seen that the actuator housing contains a conventional arrangement of opposed tappet assemblies 6, 7, each of which includes a sleeve 6A, 7A slidable in respective bore parts of the housing. The sleeves 6A, 7A contain respective part-spherical recesses 6B, 7B which receive the adjacent complementary part-spherical end portions of struts 8, the other similarly shaped strut end portions being received within complementary pockets 9A formed in a rotary cam 9 which is mounted and operated by way of a cam shaft (not shown) in conventional manner. Rotation of the cam in the appropriate direction urges the struts and consequently the tappet assemblies 6, 7 outwardly to separate the shoes 1 and 2 into braking engagement with a surrounding brake drum. Each tappet assembly includes an externally non-reversibly threaded stem 6C, 7C, the outer end portions of which engage the shoes 1, 2 in a manner which locks the stems against rotation, the stems being screwed into correspondingly threaded bores 6D, 7D of the sleeves 6A, 7A. Rotation of the sleeves in one direction causes the stems to be screwed axially outwardly for adjustment purposes.

The tappet assembly 6 forms part of an adjuster mechanism, which includes an adjuster assembly indicated generally at 20, operation of which causes the sleeve 6A to rotate in order to cause the aforesaid axial extending movement of the stem 6C, in the manner to be described. In this particular embodiment, adjusting movement of the tappet 6 is transmitted to the tappet 7 by a ring gear 10 rotatably mounted in the housing and arranged to bridge between the tappet sleeves 6A, 7A. Teeth 10A on the ring gear engage corresponding external gear formations 12 on the tappet sleeves, so that rotation of the tappet sleeve 6A by the adjuster mechanism 20 causes corresponding rotation of the tappet sleeve 7A and outward axial movement of the stem 7C.

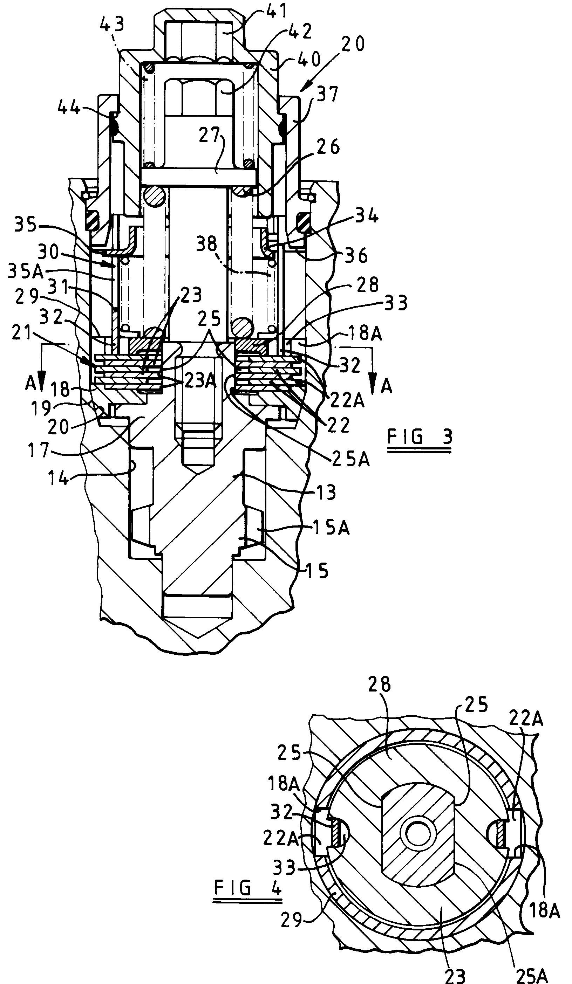

As can be seen more clearly from Figure 3, the adjuster assembly includes an adjuster shaft 13 rotatably mounted in a bore 14 of the adjuster housing which is stepped to receive various parts of the adjuster shaft and its associated components which have different diameters. Teeth 15A on a pinion 15 carried by the adjuster shaft are engaged with a helical tooth formation 16 on the outer surface of the tappet sleeve 6A (Figure 2). A larger diameter portion 17 of the adjuster shaft 13 supports the shaft rotatably within the bore 14 and carries a clutch member 18 having a conical clutch face 19 which normally cooperates with a corresponding conical clutch face 20 formed on the internal wall of the housing.

The clutch member 18 is connected to the adjuster shaft 13 by way of a multi-plate clutch, indicated generally at 21, alternate plates 22 of which have tongues 22A engaged in slots 18A of the clutch member 18 (Figure 4). The other alternating plates 23 surround the adjuster member and have internal flats 25A which cooperate with flats 25 on the adjuster member to prevent them from rotating relative to the latter. The plates 22, 23 are urged into frictional engagement by way of a spring 26 acting between a flange 27 of the adjuster shaft and a washer 28 lying on top of the clutch plates and within a peripheral rim 29 of the clutch member 18.

Since the positional integrity of the adjuster member 13 is dependent upon the frictional clutching action of the spring-urged clutch member 18, it is desirable to provide positive means for restraining the adjuster member against random de-adjusting movement. For this purpose, a coupling device is provided, indicated generally at 30 and which includes a first component 31 in the form of a hollow can made from thin gauge material and surrounding the adjuster member, the can having a pair of diametrically opposed tongues 32 projecting from its lower end and engaged within slots 33 formed in the washer 28. A second generally annular component 34 of the coupling means also surrounds the adjuster member and has three angularly spaced radially projecting tongues 35 which engage in respective longitudinal slots 35 of the can 31 to render the two components relatively non-rotatable, but to allow relative axial movement between the two. The radially outermost extremities of the arms 35 constitute pawls which engage teeth 36 formed around the lower end of a sleeve 37 fixed to the casing, the component 34 being urged upwardly by a spring 38 acting between the two components 31 and 34 to hold the pawls firmly in engagement with the teeth 36. The direction of the ratchet action between the pawls and teeth is such that rotation of the adjuster member 18 in the de-adjusting direction is normally prevented, although the adjuster member is able to rotate in the opposite direction in order to permit operation of the automatic adjuster, which will be described hereafter. A sleeve 40 is mounted within the sleeve 37 and constitutes a manual adjuster element. The sleeve 40 has an internal hexagonal formation 41 complementary to a similar formation 42 formed at the upper end of the adjuster member and a spring 43 urges the sleeve 40 against a shoulder 44 of the sleeve 37 such that the lower end of the sleeve 40 is normally held spaced from the upper end of the component 34 of the coupling means 30 and the hexagonal formations 41, 42 are disengaged. When it is desired to de-adjust the brake manually, for servicing purposes for example, the sleeve 40 is urged inwardly to engage the hexagonal formations 41, 42, simultaneously disengaging the pawls from the ratchet teeth 36. The adjuster member 13 may then be rotated in the de-adjustment direction to de-adjust the brake, as required.

The automatic adjustment action takes place when the brake is actuated by rotation of the cam 9 to urge the tappets 6 and 7 outwardly in order to apply the shoes 1 and 2 against the brake drum. A predetermined amount of backlash is provided between the teeth 15A of the adjuster member and 16 of the tappet sleeve 6A, or at any other location in the actuator or adjuster which may be convenient, to permit the shoes to move outwardly sufficiently to take up the maximum desired shoe to drum clearance without causing operation of the adjuster. When wear of the shoes becomes such that the shoe movement exceeds this maximum clearance, the flanks of the teeth 15A, 16 come into engagement and, since the adjuster member 13 is held against rotation by engagement of the clutch member 18 against the clutch surface 20, continued outward movement of the tappet 6A causes the sleeve 6A to rotate and wind out the stem 6C to take up the excessive clearance. Once the shoe 1 is applied against the drum, the axial force in the threaded connection between the components 6A, 6C, increases to a level which then precludes further rotation of the stem 6C. Any additional movement of the tappet as a result of drum deflection is translated via the teeth 15A, 16 into rotation of the adjuster member by slipping of the clutch 21, without further adjustment being made. When the brakes are released, the brake shoe spring force prevents the stem 6C from rotating in the sleeve 6A as the tappet 6 moves inwardly and this inward movement acting through the helical teeth 16 on the teeth 15A causes the adjuster member 13 to be lifted so that the clutch 18 is disengaged from its seat 20 against the force of the spring 43. As the tappet inward movement continues, the assembly constituted by the adjuster member 13, clutch member 18 and coupling device rotates, causing the pawls 35 to click over the ratchet teeth 36, as far as is necessary to permit this to happen. As mentioned previously, rotation of the overall assembly in the opposite direction is prevented by the ratchet teeth so as to preclude random de-adjustment of the adjuster.

Although in the embodiment described, the ring gear 11 interconnecting the two adjuster sleeves 6A, 7A causes any adjustment effected at the tappet 6 to be applied also to the tappet 7, the tappet 7 could alternatively be provided with its own adjuster device. Moreover, the multi-plate clutch 21 may be replaced by any other convenient form of clutch, such as a wrap spring device.

It will be seen that the provision of the multi-plate clutch 21, or a device having an equivalent function, enables the adjuster to operate in a load insensitive manner by preventing the adjuster from operating when the braking load transmitted by the tappets is sufficient to lock the sleeve 6A and stem 6C against rotation.

## Claims

1. An automatic adjuster comprising a two part brake-applying strut (6) of which the parts (6A, 6C) are interconnected by a threaded connection enabling the length of the strut to be varied by relative rotation of the parts, an adjuster member (13) having a drive connection (15, 16) with one (6A) of the strut parts, first clutch means (19, 20) acting to hold the adjuster member (13) against rotation during brake-applying movement of the strut enabling the drive connection to cause relative rotation between the strut parts, in response to excessive brake-applying movement of the strut, such as to cause a compensatory increase in the length of the strut, characterised in that the adjuster member (13) and first clutch means are interconnected by second clutch means (21) which normally acts to prevent rotation of the adjuster member, but permits rotation of the adjuster member and thus prevents further relative rotation of the strut parts (6A, 6C), when the braking load through the strut (6) reaches a predetermined value.

2. An automatic adjuster according to Claim 1, characterised in that the first clutch means (19, 20) includes a clutch member (18) normally held in clutching engagement with fixed structure (20), the clutch member (18) being connected to the adjuster member (13) by way of the second clutch means.

3. An automatic adjuster according to Claim 1 or Claim 2, characterised in that the second clutch means (21) is of the multi-plate type.

4. An automatic adjuster according to Claim 3, characterised in that the clutch member (18) of the first clutch means (19, 20) is positively connected to one set of plates (22) of the multi-plate clutch (21) and the adjuster member (13) is positively connected to another set of plates (23) of the multi-plate clutch (21).

5. An automatic adjuster according to Claim 4, characterised in that the clutch member (18) of the first clutch means (19, 20) is connected to its associated clutch plates (22) by interengaged tongue and slot formations (22A, 18A) and the adjuster member (13) extends through its associated clutch plates (23) and has a flat external surface portion (25) engaging with a corresponding internal surface portion of the plates to provide said positive connection.

6. An automatic adjuster according to any one of the preceding claims, characterised in that the adjuster member (13) is connected by a uni-directional mechanism (30) to a fixed structure (37) in such a manner as to permit movement of the adjuster member in an adjusting direction, but to prevent movement thereof in the reverse direction.

7. An automatic adjuster according to Claim 6, characterised in that the uni-directional mechanism (30) is manually disengagable by a manual adjuster element (40) to permit rotation of the adjuster member (13) in a de-adjustment direction.

8. An automatic adjuster according to Claim 7, characterised in that the manual adjuster element (40) is arranged so that when it is moved into driving engagement with the adjuster shaft (13) for de-adjustment, it simultaneously acts to release the uni-directional mechanism (30) in order to permit de-adjustment rotation of the adjuster member (30).

9. An internal shoe drum brake according to any one of the preceding claims, characterised in that two brake-applying struts (6, 7) are provided for respective brake shoes (1, 2), the struts being coupled together by means (10, 12) such that the struts (6, 7) are adjusted simultaneously by a single adjuster member (13) acting on one (16) of them.

10. An internal shoe drum brake incorporating an automatic adjuster according to any one of the preceding claims.

F I G   1

FIG 2

EP 0 471 496 A1

FIG 3

FIG 4

**European Patent Office**

# EUROPEAN SEARCH REPORT

Application Number

EP    91 30 7212

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0410597 (LUCAS INDUSTRIES) <br> * column 3, line 49 - column 4, line 40; figure 4 * | 1, 2, 6, 9 | F16D65/56 |
| P,X | EP-A-0410598 (LUCAS INDUSTRIES) <br> * column 3, lines 16 - 19; figure 3 * | 1, 3, 9 | |
| A | EP-A-0196817 (LUCAS INDUSTRIES) <br> * figures 3, 6 * | 6-9 | |
| A | EP-A-0027352 (LUCAS INDUSTRIES) | | |
| A | GB-A-2104988 (LUCAS INDUSTRIES) | | |

TECHNICAL FIELDS SEARCHED (Int. Cl.5)

F16D

The present search report has been drawn up for all claims

| Place of search | Date of completion of the search | Examiner |
|---|---|---|
| BERLIN | 13 NOVEMBER 1991 | LUDWIG H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)